Europäisches Patentamt

European Patent Office

Office européen des brevets

(19)

(11) Veröffentlichungsnummer: **0 292 424 B1**

(12) # EUROPÄISCHE PATENTSCHRIFT

(45) Veröffentlichungstag der Patentschrift:
24.07.91 Patentblatt 91/30

(51) Int. Cl.⁵: **C03B 19/08, C03B 19/10, C03C 11/00**

(21) Anmeldenummer: 88810138.3

(22) Anmeldetag: 07.03.88

(54) **Verfahren und Vorrichtung zur Herstellung von Schaumkörpern.**

(30) Priorität: 16.04.87 CH 1491/87

(43) Veröffentlichungstag der Anmeldung:
23.11.88 Patentblatt 88/47

(45) Bekanntmachung des Hinweises auf die
Patenterteilung:
24.07.91 Patentblatt 91/30

(84) Benannte Vertragsstaaten:
AT BE CH DE ES FR GB GR IT LI LU NL SE

(56) Entgegenhaltungen:
WO-A-81/02196
DE-A- 1 596 630
DE-A- 3 314 797
FR-A- 2 192 986
FR-A- 2 354 301

(73) Patentinhaber: MISAG AG
CH-7472 Surava (CH)

(72) Erfinder: Durisch, Judith
Saluferstrasse 34
CH-7000 Chur (CH)
Erfinder: Heeb, Marcel
Chlei-Rüfi
CH-7203 Trimmis (CH)
Erfinder: Gadient, Christian
La Palousa
CH-7077 Valbella (CH)

(74) Vertreter: Frauenknecht, Alois J. et al
c/o PPS Polyvalent Patent Service AG,
Mellingerstrasse 1
CH-5400 Baden (CH)

EP 0 292 424 B1

## Beschreibung

Die vorliegende Erfindung bezieht sich auf ein Verfahren und eine Vorrichtung zur Herstellung von Schaumkörpern aus Glas und/oder glasähnlichem Material und aus einem Aktivator.

Ein Verfahren zur Herstellung von Schaumglaskörpern, die als Isoliermittel im Baugewerbe Verwendung finden, ist schon aus der EP-A1-0052693 bekannt. Danach werden die Schaumkörper aus zwei verschiedenen gemahlenen Glassorten unter Zusatz eines Treibmittels mit Wasser zu einer Schlempe angeteigt und danach in zwei Stufen verschäumt. In der zweiten Stufe werden Sauerstoff abgebende Treibmittel zugesetzt und bei Temperaturen von 700°C bis 900°C gebläht. Trotz der Reduzierung der Wassermenge durch Herstellung eines Keramikteigs enthält dieser noch einen grossen Anteil an freiem und gebundenem Wasser. Zur Verdampfung, vor allem des gebundenen Wassers, sind grosse Energiemengen erforderlich, so dass die Wirtschaftlichkeit des Gesamtprozesses dadurch in Frage gestellt wird. Auch ist der Nachblähprozess relativ zeitaufwendig.

Ferner sind Ansätze und Verfahren zur Herstellung niederschmelzender Schaumkeramikblöcke aus gemahlenem Glas, feinzerkleinertem Ergussgestein, Treibmittel und Flussmittel aus der DE-A1-3314797 bekannt. Die Verfahren bedingen ein Aufheizen der Pulvermasse in hitzebeständigen Formen auf 700° bis 900°C während ein bis zwei Stunden und eine anschliessende Haltezeit bei einer Temperatur von über 700°C. Danach werden die geschäumten Körper innert weniger Minuten auf Temperaturen von zirka 500°C abgekühlt und hierauf während 10 bis 15 Stunden auf Raumtemperatur gebracht. Derart hergestellte Schaumkeramikkörper sind relativ teuer, da sie einen hohen Energiebedarf bei ihrer Herstellung benötigen.

Ein bandförmiger Blähofen mit Rollen und mehreren vorgeschalteten Extrudern zur Herstellung von plattenähnlichen Schaumkörpern ist bekannt aus der WO-A-81/02196. Wasserhaltige Streifen eines keramischen Gemisches erfahren in diesem gasbeheiztem Blähofen während 15 bis 30 Minuten thermische Behandlungen bei Temperaturen bis 1760°C, wahlweise in reduzierender oder oxidierender Atmosphäre. Als Blähmittel dienen Kohlenstoffverbindungen, insbesondere Zucker. Neben dem hohen Aufwand an Energie weist die Anlage den Nachteil eines grossen apparativen Aufwandes auf.

Ein weiteres Verfahren zur Herstellung von zellförmigem Material ist aus der DE-A1-1596630 bekannt. Nach diesem Verfahren werden aus einem Glaspulver- und Treibmittelgemisch in einer Tablettiermaschine, unter Zugabe von flüssigem Bindemittel, Kugeln geformt. Diese werden getrocknet, mit einem Gleitmittel beschichtet und in einem Ofen auf eine Temperatur von 815° bis 1205°C gebracht. Anschliessend werden gesonderte Agglomerate geformt, gesintert und zu einer Folie gepresst, die in eine weitere Heizkammer geführt wird. In dieser werden die Agglomerate auf der Oberfläche eines Metallbandes, insbesondere einer Metallschmelze, transportiert, geschmolzen und zu einem Band oder einer Folie geschäumt, welche dann spannungsfrei geglüht und abgekühlt wird. Dieses Verfahren ist relativ kompliziert und ebenfalls energieaufwendig.

Aufgabe der vorliegenden Erfindung ist es, ein energiesparendes schnelles und wirtschaftliches Verfahren zur Herstellung von Schaumkörpern aus Glas und/oder glasähnlichem Material und aus einem Aktivator zu schaffen. Die Schaumkörper sollen dabei ausreichend mechanisch fest sein und es soll die Möglichkeit bestehen, verschiedene Arten und Grössen der Schaumkörper zu wählen. Die Aufgabe besteht auch darin, eine Vorrichtung zur Durchführung des Verfahrens zur Verfügung zu stellen, welche ermöglicht, unter Verminderung des Energieverbrauchs Schaumglaskörper mit oder ohne Glasierung in gewählten Abmessungen herzustellen, ohne den Einsatz von teuren Formen.

Die erstgenannte Aufgabe wird erfindungsgemäss dadurch gelöst, dass der Aktivator aus einem Gemisch von 50 bis 80 Gew.-Teilen Siliciumkarbid, 20 bis 50 Gew.-Teilen Borax und 1 bis 10 Gew.-Teilen Kohlenstoff im trockenen Zustand gebildet wird, dass der Aktivator mit dem Mehl aus Glas und/oder glasähnlichem Material in einer Menge von 1,5 bis 2,5 Gew.-% des genannten Mehls trocken vermischt wird und dass das Gemisch in einem einzigen Verfahrensschritt bei einer Temperatur zwischen 750°C und 950°C während 5 bis 15 min gebläht wird. Wie ersichtlich, wurde in dieser Lösungs der billige Borax in einer verhältnismässig grossen Menge verwendet, wobei die praktische Ausführung sehr gute Ergebnisse gezeigt hatte. Es wird kein ungebundenes Wasser verwendet und nur wenig Energie für das einzige Blähen ohne vorheriges Sintern angesetzt.

Eine andere Lösungsvariante der erstgenannten Aufgabe besteht darin, dass der Aktivator aus einem Gemisch von 85 bis 95 Gew.-Teilen Siliciumkarbid, aus 1 bis 10 Gew.-Teilen Manganoxyd und aus 1 bis 10 Gew.-Teilen Kohlenstoff im trockenen Zustand gebildet wird, dass der Aktivator mit dem Mehl aus Glas und-/oder glasähnlichem Material in einer Menge von 1,5 bis 2,5 Gew.-% des genannten Mehls trocken vermischt wird und dass das Gemisch in einem einzigen Verfahrensschritt bei einer Temperatur zwischen 750°C und 950°C während 5 bis 15 min gebläht wird. Bei diesem Verfahren enthält das Gemisch kein ungebundenes Wasser und die Verwendung des Siliciumcarbids mit dem Manganoxyd sichert, dass in bestimmten Mengen ein aus $CO_2$ und CO bestehendes Blähgas energiesparend entwickelt wird.

Es ist zweckmässig, wenn zusätzlich mit dem Aktivator in einer Menge von 1,5 bis 2,5 Gew.-% des genannten Mehls noch ein Metalloxyd, vorzugsweise Bleioxyd oder Kupferoxyd, in trockenem Zustand vermischt und

2

dieses Gemisch in einer Menge von 0,5 bis 1,5 Gew.-% des genannten Mehls mit diesem Mehl trocken homogenisiert wird. Die Beigaben dieser Metall oxyde sichern eine gute Funktionsweise des Verfahrens. Als Manganoxyd kann zweckmässig Braunstein verwendet werden.

Die erstgenannte Aufgabe kann zweckmässig auch dadurch gelöst werden, dass der Aktivator aus einem Gemisch von 45 bis 50 Gew.-Teilen Siliciumkarbid, 1 bis 10 Gew.-Teilen Kohlenstoff, 20 bis 26 Gew.-Teilen Kupferoxyd und 20 bis 26 Gew.-Teilen Bleioxyd im trockenen Zustand gebildet wird, dass der Aktivator mit dem Mehl aus Glas und/oder glasähnlichem Material in einer Menge von 1,5 bis 2,5 Gew.-% des genannten Mehls trocken vermischt wird und dass das Gemisch in einem einzigen Verfahrensschritt bei einer Temperatur zwischen 750°C und 950°C während 5 bis 15 min gebläht wird.

Es ist vorteilhaft, wenn als Kohlenstoff Flammruss angesetzt wird. Der Flammruss oxydiert fast vollkommen und hinterlässt somit keine nennenswerten Rückstände. Dies ist insbesondere für die Festlegung der Porengrösse von Vorteil.

Nach einer Weiterausbildung der Erfindungsidee werden beim Vermischen des Aktivators mit dem Mehl aus Glas und/oder glasähnlichem Material Kleister und/oder anderes zusammenhaltendes Material in einer Menge von 2 bis 5 Gew.-% des Gemisches oberflächlich angesetzt. Durch diese Weiterentwicklung kann man das Zusammenhalten der Partikel verbessern, ohne zuviel Wasser zu verwenden und ohne den Energieverbrauch wesentlich zu erhöhen.

Zweckmässig werden aus dem Gemisch des genannten Mehls mit dem Aktivator während des Mischens Granulatkörper mittels Granulierverfahren gebildet, danach gebläht und bei Raumtemperatur abgekühlt. Bei diesem Verfahren werden also direkt in dem Mischer die rohen Granulatkörper gebildet, die dann später gebläht werden. Zum Granulieren wird z.B. ein Drehteller verwendet.

Nach einer anderen Variante des Verfahrens werden aus dem Gemisch des genannten Mehls mit dem Aktivator Kuchen hergestellt, danach gebläht und durch Abschrecken mit Kühlluft oder Wasser zum Zerbrechen zu Splitt gebracht. Gemäss dieser Variante werden also mehrere Kuchen oder ein Strang aus dem Gemisch gemacht, die dann nach dem Blähprozess infolge des Abschreckens zu Splitt zerfallen. Durch die Dicke des Kuchens oder Stranges und die Menge und Temperatur des Kühlwassers oder der Kühlluft kann die Grösse der Splitteile beeinflusst werden.

Nach einer zweckmässigen Variante wird das Gemisch des genannten Mehls mit dem Aktivator nach dem Mischen in eine Form als eine flache Schicht gefüllt, danach zu einer Schaumglasplatte gebläht und anschliessend während 5 bis 20 min auf die Raumtemperatur abgekühlt. Solche Platten dienen vornehmlich im Bauwesen als Wärme- und Lärm-Isolierplatten, wobei auch die guten mechanischen Eigenschaften ausgenützt werden können.

Wenn eine geschlossene Form der Granulatkörper oder des Splitts oder der Schaumglasplatten erwünscht ist, werden die Schaumkörper am Ende des Herstellungsverfahrens zusätzlich glasiert. Die geschlossene Oberfläche der Schaumkörper hat den Vorteil, dass das kleinzellige Schaummaterial nahezu kein Wasser aufzunehmen vermag und dadurch einen konstanten Wärmeisolierwert aufweist.

Die erfindungsgemässe Vorrichtung zur Durchführung des Verfahrens ist zweckmässig so ausgebildet, dass ein Ausgang eines Silos für vorgemahlenes Glas und/oder glasähnliches Material und ein Ausgang eines Silos für Aktivator über zugehörige Dosierungsvorrichtungen an einen Mischer angeschlossen sind, dessen Austritt mit Transportern für rohe Kuchen aus einer Mischung des Glasmehls mit dem Aktivator an wenigstens zwei parallel angeordnete Transportbänder und/oder Bandblähöfen angeschlossen ist, wobei die Transportbänder der Bandblähöfen aus einem elastischen Blech bestehen, und dass für die in den Bandblähöfen geblähten Kuchen Leitungen zu Transportern ausgebildet sind, die sich in einem Kühlkanal, in dem durch Abkühlung Splitt entsteht, befinden und zum Leiten des Splitts über eine Gleitbahn in einen Lagerungsbehälter bestimmt sind. Diese Vorrichtung weist vor allem den Vorteil auf, dass wenigstens zwei parallel angeordnete Transportbänder und/oder Bandblähöfen gleichzeitig funktionieren können und somit die Kapazität der Vorrichtung in diesem normalerweise als Engpass betrachteten Teil wesentlich erweitern. Die Transportbänder sind aus einem elastischen Blech hergestellt, vorteilhaft aus einem Cr-Ni-Stahl-Blech, wobei jedoch die Kapazität nicht ohne weiteres durch Erweiterung der Breite der Transportbänder erhöht werden kann. Die verschiedenen Wärmedehnungen infolge der Blähtemperaturen und der Kühlung verursachen bei zu breiten Bändern Funktionsstörungen. Die Abhilfe wird jedoch durch die erwähnte Parallelschaltung mehrerer Blähöfen und/oder mehrerer Transportbänder in einem Blähofen erreicht.

Für die Herstellung von Granulatkörpern ist die Vorrichtung zur Durchführung des Verfahrens so ausgebildet, dass ein Ausgang eines Silos für vorgemahlenes Glas und/oder glasähnlichem Material und ein Ausgang eines Silos für Aktivator über zugehörige Dosierungsvorrichtungen an einen Granulator angeschlossen sind, dessen Austritt mit Transportern für rohe, mit einem Oberflächenbinder in Granulatform gehaltene Körper aus einer Mischung des Glasmehls mit dem Aktivator an wenigstens zwei parallel angeordnete Blähöfen angeschlossen ist und dass für die in den Blähöfen geblähten Granulatkörper Leitungen zu Transportern ausgebildet sind, die sich in einem Kühlkanal mit Raumtemperatur befinden und zum Leiten der Granulatkörper über eine Gleitbahn in einen Lagerungsbehälter bestimmt sind. Als Blähöfen werden zweckmässig Bandblähöfen oder Drehrohröfen eingesetzt. In diesem Fall werden also in einem Mischer, der gleichzeitig als ein Granulator, z.B. ein Drehteller, verwendet wird, aus den pulverigen Bestandteilen direkt rohe Granulatkörper gebildet, und zwar vor allem im Trockenverfahren. Diese Art des Trockenmischens und Granulierens hat sich in der Praxis bewährt. Wenn zweckmässig, kann selbstverständlich eine kleine Menge eines oberflächlich zusammenhaltenden Mittels, z.B. eines Kleisters, beigemischt werden. Während der Blähung in den Blähöfen ist die Granulatform also schon gegeben und während des Blähprozesses werden nur die Abmessungen vergrössert.

Für die Herstellung von Schaumglasplatten ist die Vorrichtung so ausgebildet, dass ein Ausgang eines Silos für vorgemahlenes Glas und/oder glasähnliches Material und ein Ausgang eines Silos für Aktivator über zugehörige Dosierungsvorrichtungen an einen Mischer angeschlossen sind, dessen Austritt in Formen führt, die sich auf den Transportern befinden und Grundrisse der zu herstellenden Schaumglasplatte vorbestimmen, dass die Transporter mit den das erwähnte Gemisch enthaltenden Formen an wenigstens zwei parallel angeordnete Transportbänder und/oder Bandblähöfen angeschlossen sind und dass für die in den Bandblähöfen geblähten Schaumglasplatten Leitungen zu Transportern ausgebildet sind, die sich in einem Kühlkanal befinden und die Schaumglasplatten während der Abkühlung tragen.

Wenn die Schaumglaskörper (Splitt, Platten oder Granulat) glasiert werden sollen, ist vorteilhaft zwischen dem Kühlkanal und der Gleitbahn in den Lagerungsbehälter eine Glasiervorrichtung zwischengeschaltet. Solche Glasiervorrichtungen sind allgemein bekannt.

Die vorliegende Erfindung wird anhand einiger Zeichnungen näher erläutert.

Es zeigt:

Fig. 1     eine schematisch gezeichnete und wesentlich vereinfachte, beispielsweise Ausführungsform der erfindungsgemässen Vorrichtung zur Herstellung von Schaumglaskörpern,

Fig. 2     den ersten Teil einer schematisch gezeichneten, aber ausführlicher mit mehreren Bestandteilen dargestellten erfindungsgemässen Vorrichtung und

Fig. 3     den zweiten Teil der erfindungsgemässen Vorrichtung gemäss der Fig. 2.

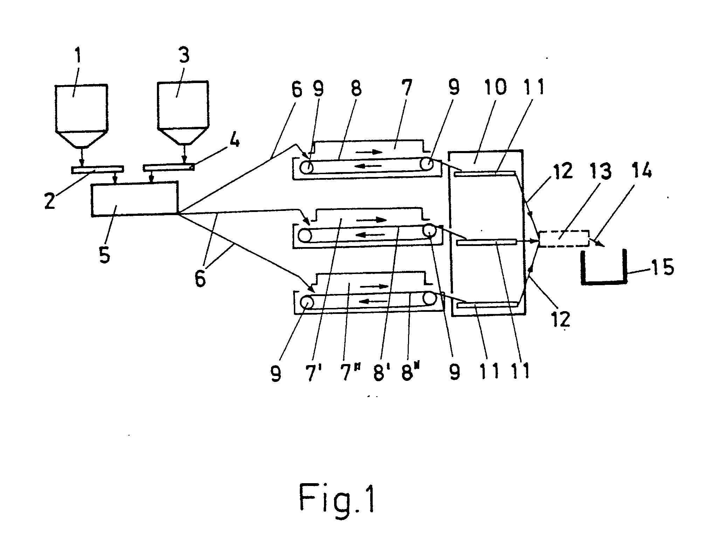

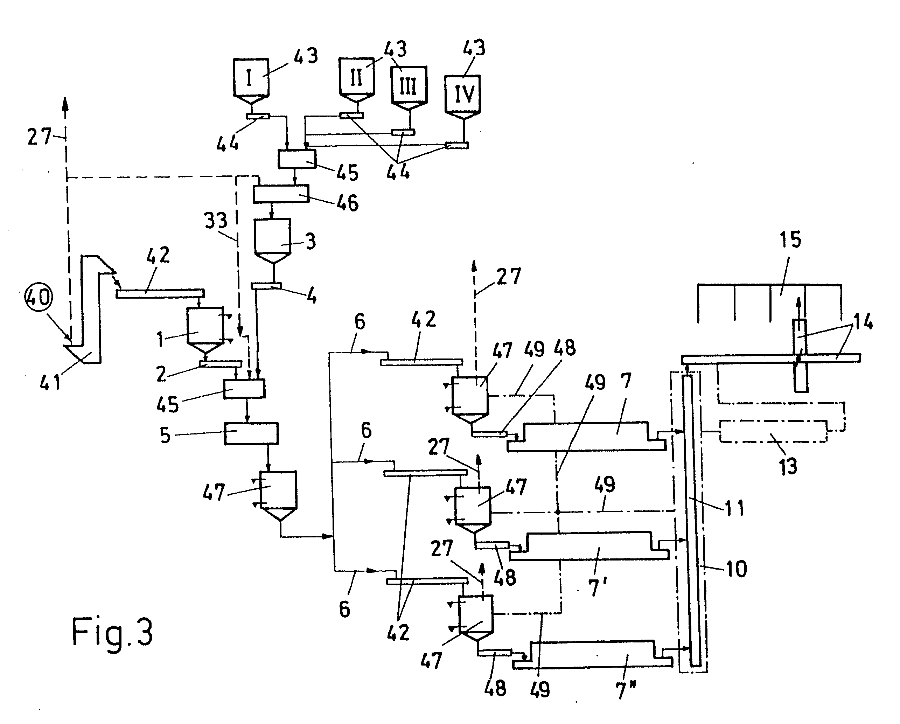

Fig. 1 zeigt ein Silo 1 für Glasmehl, eine Dosierungsvorrichtung 2 für Glasmehl und ein anderes Silo 3 für Aktivator mit einer zugeordneten Dosierungsvorrichtung 4 des Aktivators. Ein Mischer 5 kann sowohl für einfaches Mischen angesetzt werden als auch wie ein Mischer, der gleichzeitig als Granulator tätig ist. Vom Mischer 5 führen drei Transporter 6 zu drei Bandblähöfen 7, 7', 7'', die mit über Rollen 9 geführten Transportbändern 8, 8', 8'' ausgestattet sind. In jedem Bandblähofen 7, 7', 7'' sind zwei parallele Transportbänder 8, 8', 8'' angeordnet. Diese Transportbänder bestehen aus einem elastischen Cr-Ni-Stahl-Blech. Die Oberflächen der Transportbänder 8, 8', 8'' sind an Transporter 11 eines Kühlkanals 10 angeschlossen. Dieser Kühlkanal 10 kann auch mit einer Vorrichtung für Wärmerückgewinnung versehen sein, die später anhand der Fig. 3 näher erläutert wird. Die inneren Transporter 11 im Kühlkanal 10 sind an weitere Transporter 12 angeschlossen, die in eine Glasiervorrichtung 13 führt. Diese Glasiervorrichtung 13 wird selbstverständlich nur dann eingesetzt, wenn die Schaumglaskörper glasiert werden sollen. Ein Transporter 14, der in diesem Fall als eine Gleitbahn konstruiert ist, führt in einen Lagerungsbehälter 15 für Granulat oder Splitt.

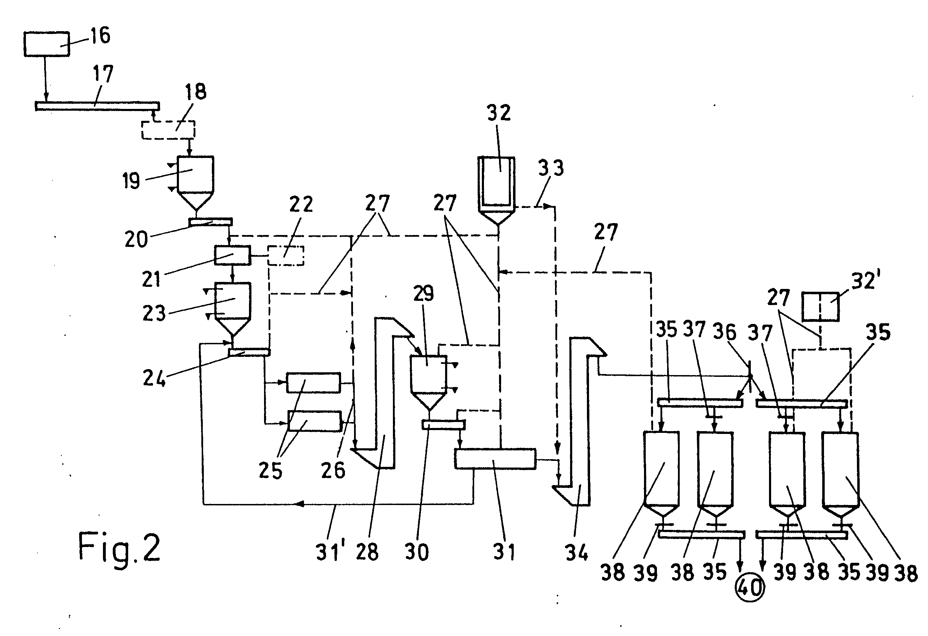

Die Fig. 2 zeigt den ersten Teil einer erfindungsgemässen Vorrichtung zur Herstellung von Schaumglaskörpern, wobei der zweite Teil dieser Vorrichtung in der Fig. 3 dargestellt ist. Durch die je in einem Kreis geschriebene Bezugsziffer 40 wird der Anschluss der Fig. 2 an die Fig. 3 anschaulich gekennzeichnet.

Eine Glasreinigungsvorrichtung 16 führt mit ihrem Ausgang auf ein Zufuhrband 17, das das Bruchglas bzw. den Glassplitt in eine Glastrocknungsvorrichtung 18 führt. Diese Vorrichtung muss jedoch nicht vorhanden sein und ist aus diesem Grund gestrichelt gezeichnet. Der Anschluss dieser Vorrichtung 18 leitet das Material in ein Silo 19, das mit einer Dosierungsvorrichtung 20 versehen ist, die wieder das Material für eine Vormahlungsvorrichtung 21 liefert. Das vorgemahlene Material wird in einem Silo 23 gesammelt, das ebenfalls mit einer Dosierungsvorrichtung 24 ausgestattet ist. Diese Dosierungsvorrichtung 24 liefert das vorgemahlene Material in eine Feinmahlungsvorrichtung 25, die in einer parallelen Anordnung doppelt vorhanden ist, um die Bearbeitung der vorbestimmten Durchgangsmenge zu sichern. Mit Transportern 26 wird der untere Teil des ersten Elevators 28 beliefert. Abzugsrohre 27 dienen der Entstaubung verschiedener Bestandteile. Der Elevator 28 hebt das feingemahlene Glasmaterial in ein Silo 29, das mit einer Dosierungsvorrichtung 30 versehen ist. Die Dosierungsvorrichtung 30 leitet das Material in eine Kornklassifizierungsvorrichtung 31, die mit einer Überkornrückführung 31' versehen ist, welche die zu grossen Teile zurück vor die Feinmahlungsvorrichtung 25 transportiert. Oberhalb der Kornklassifizierungsvorrichtung 31 ist ein Filter 32 angeordnet, aus dem jedoch die noch brauchbaren Teilchen durch ein Rückführungsrohr 33 auf den unteren Teil des zweiten Elevators 34 fallen. Der obere Teil dieses zweiten Elevators 34 beliefert zwei Förderschnecken 35, wobei eine Weiche 36 vorgesehen ist, die die Richtung der Führung zu der einen oder zu der anderen Förderschnecke 35 steuert. Zu mehreren Silos 38 führen Leitungen, wobei die Silos 38, die in den vorderen Teilen der Förderschnecken 35 angeordnet sind, mit Schiebern 37 versehen sind. Die Ausgänge der Silos 38 sind mit Schiebern 39 versehen, so dass das Silo oder die Silos 38 gewählt werden können, aus welchen auf die unteren Förderschnecken das Material geführt wird.

Diese unteren Förderschnecken 35 sind mit einer Übergabe 40 versehen. Auch hier sind Abzugsrohre 27 für die Entstaubung in einen Silo-Filter 32' angeordnet.

Für den Fall, dass die Silos 38 als Zwischenlagerung für eine zu grosse Menge des gelieferten Glasmehls nicht gebraucht werden, können diese Silos 38 überbrückt werden.

Vom oberen Teil wird das Glasmehl des zweiten Elevators 34 in Fig. 2 über eine Weiche direkt in das Silo 1 in der Fig. 3 geleitet, so dass bei dieser Variante der dritte Elevator 41 und die Förderschnecke 42 nicht eingesetzt werden.

Die Fig. 3 beginnt mit derselben Übergabe 40, wobei diese Bezugsziffer wegen der Übersichtlichkeit in bezug auf den Zusammenhang der Fig. 2 und 3 je im Kreis gezeichnet ist. Die Übergabe 40 führt zum unteren Teil eines dritten Elevators 41, der das bearbeitete Glasmehl auf eine Förderschnecke 42 leitet. Diese liefert das Material in das Silo 1, das schon in der vereinfachten Zeichnung 1 gezeigt und anhand dieser Zeichnung beschrieben wurde. Alle Teile, die schon in der Fig. 1 beschrieben worden sind, sind in der Fig. 3 mit denselben Bezugsziffern versehen. Dies ermöglicht, das vereinfachte Funktionsschema gemäss der Fig. 1 mit der ausführlicheren beispielsweisen Darstellung gemäss den Fig. 2 und 3 zu vergleichen. Das Silo 1 liefert das Material auf die Dosierungsvorrichtung 2, von welcher das Glasmehl auf eine Waage 45 fällt. Im oberen Teil der Fig. 3 sind vier Silos I-IV dargestellt, die mit der Bezugsziffer 43 bezeichnet sind und die Komponenten des Aktivators enthalten. Unter dem Ausdruck "Aktivator" versteht man vor allem das Blähmittel, das jedoch auch eine Zugabe eines Flussmittels und/oder Farbstoffes enthalten kann. Jedem Silo 43 ist je eine Dosierungsvorrichtung 44 zugeordnet, wobei alle Dosierungsvorrichtungen 44 eine zweite Waage 45 beliefern. Ein Mischer 46 wird aus dieser Waage 45 mit dem Aktivator versorgt, und der Aktivator wird in ihm ausreichend homogenisiert. Der homogenisierte Aktivator fällt dann in das Silo 3 mit der zugeordneten Dosiervorrichtung 4. Aus dieser Dosiervorrichtung des Aktivators fällt der homogenisierte Aktivator auf die schon erwähnte erste Waage 45, wo er gemeinsam mit dem Glasmehl gewogen wird. Die gewogene Menge des Gemisches Glasmehl/Aktivator fällt dann in ein Silo 47, das mit Hilfe von drei Transportern 6 drei Förderschnecken 42 beliefert, die wiederum über weitere Silos 47 mit entsprechenden Dosiervorrichtungen 48 drei Bandblähöfen 7, 7', 7'' mit dem Material versorgen. Diese Bandblähöfen 7, 7', 7'' sind in der Fig. 1 ausführlicher dargestellt und anhand dieser Fig. näher beschrieben. In der Fig. 3 ist zusätzlich noch eine Wärmerückführung 49 eingezeichnet, die vom Kühlkanal 10 zu den Silos 47 leitet und, falls gewünscht, das Gemisch in den Silos 47 vorwärmen kann, so dass dann die Bandblähöfen 7, 7', 7'' mit kleinerem Energieverbrauch arbeiten. Die Temperatur des vorgewärmten Materials liegt unter der Sinter- und Blähtemperatur. Bei der Verwendung oder Nichtverwendung dieser Rückführung ist die Wirtschaftlichkeit entscheidend. Im Kühlkanal 10 befindet sich ein Transporter 11, der zu einem weiteren Transporter 14 leitet. Dieser Transporter 14 besteht aus zwei Teilen, wobei der senkrecht angeordnete Teil in die Richtung von Teilen des Lagebehälters 15 die fertigen Schaumglaskörper liefern kann. Aus diesem Grund ist der Transporter 14 mit einer Weiche 14' versehen. Strichpunktiert ist in der Fig. 3 eine Glasiervorrichtung 13 eingezeichnet, die selbstverständlich nur dann in Betrieb genommen wird, wenn Schaumglaskörper mit glasierten Oberflächen gewünscht sind.

Die Funktionsweise wurde schon anhand beider Ausführungsbeispiele (Fig. 1 ; Fig. 2 und Fig. 3) beschrieben. Gemäss Fig. 3 werden aus dem Gemisch Glas/Aktivator Kuchen hergestellt, die dann in den Bandblähöfen 7, 7', 7'' gebläht und im Kühlkanal mit Wasser oder Kühlluft abgeschreckt werden. Durch die Intensität des Abschreckens kann man die Splittgrösse vorbestimmen. Für den Fall, dass man schon im Mischer 5 rohe Granulatkörper herstellt, wird selbstverständlich kein Abschrecken angesetzt, die geblähten Granulatkörper werden nur langsam bei Raumtemperatur gekühlt, so dass sie keine weiteren Splitter bilden. Dasselbe gilt auch für die Herstellung von Schaumglasplatten.

Das Schaumglasgranulat wird in seiner bevorzugten Gestalt abgerundet bis kugelförmig hergestellt. Die einzelnen Granulatkörper weisen einen Durchmesser von 0,5 bis 20 mm auf. Das hat den Vorteil, dass das Granulat gut rieselfähig ist und damit leicht am Ort seiner Verwendung verteilt werden kann. Die Grösse des Splitts ist durch die Dicke des Kuchens und die Intensität des Abschreckens gegeben. Durch die Erhöhung der Blähtemperatur werden die Poren des Schaummaterials vergrössert. Das Schüttgewicht des Granulats oder Splitts beträgt 100-400 g pro Liter, insbesondere 200 g pro Liter, die Dichte beträgt etwa 0,4 g pro cm³. Die geschlossene Oberfläche der Schaumglaskörper hat den Vorteil, dass das kleinzellige Material nahezu kein Wasser aufzunehmen vermag und dadurch einen konstanten Wärmeisolierwert aufweist.

Die Herstellung von Schaumglasplatten ist ebenfalls einfach. Anstelle eines endlosen Stranges hat es sich bewährt, diese Platten aus dem beschriebenen Gemisch in Formen zu blähen. Nach dem Durchgang durch erwähnte Bandblähöfen 7, 7', 7'' werden die Schaumglasplatten im Kühlkanal 10 langsam abgekühlt, um das Zerbrechen zu Splitt zu verhindern.

Die Zusammensetzung des Aktivators ist aus den fünf nächsten Beispielen ersichtlich.

### Beispiel 1

Es werden 47,5 Gew.-Teile Borax ($Na_2B_4O_7 \cdot 10 H_2O$) mit 47,5, Gew.-Teilen Siliciumcarbid (SiC) und 5 Gew.-Teilen Flammruss (feiner Kohlenstoff in feiner Verteilung) trocken vermischt. 2 Gew.-% dieses Gemisches werden mit dem Glasmehl im trockenen Zustand homogenisiert und bei einer Temperatur von 870°C während 6 min gebläht.

### Beispiel 2

Es werden 90 Gew.-Teile Siliciumcarbid mit 5 Gew.-Teilen Flammruss und mit 5 Gew.-Teilen Manganoxyd ($MnO_3$), zweckmässig in Form von Braunstein, trocken vermischt. 2 Gew.-% dieses Gemisches werden dem Glasmehl im trockenen Zustand beigemischt und das Gemisch wird bei Temperaturen zwischen 880°C und 900°C während 6 min gebläht.

### Beispiel 3

Es werden 90 Gew.-Teile Siliciumcarbid mit 5 Gew.-Teilen Flammruss und mit 5 Gew.-Teilen Manganoxyd (Braunstein) trocken vermischt. 2 Gew.-% dieses Gemisches und 1 Gew.-% Bleioxyd —$Pb_3O_4$— (Bleimennig) wird mit dem Glasmehl im trockenen Zustand homogenisiert und das Ganze wird bei Temperaturen zwischen 840°C bis 880°C 6 bis 8 min gebläht.

### Beispiel 4

Es werden 90 Gew.-Teile Siliciumcarbid mit 5 Gew.-Teilen Flammruss und mit 5 Gew.-Teile Manganoxyd (Braunstein) trocken vermischt. 2 Gew.-% dieses Gemisches und 1 Gew.-% Kupferoxyd werden mit dem Glasmehl im trockenen Zustand homogenisiert und unter Temperaturen zwischen 840°C bis 880°C während 6 bis 8 min gebläht.

### Beispiel 5

Es werden 47 Gew.-Teile Siliciumcarbid mit 23,5 Gew.-Teilen Kupferoxyd, mit 23,5 Gew.-Teilen Bleioxyd (Bleimennig) und 6 Gew.-Teilen Flammruss trocken vermischt und 2 Gew.-% von diesem Gemisch mit dem Glasmehl bei der Temperatur von 840°C bis 860°C während 7 min gebläht.

Als Glas für die Herstellung von Glasmehl verwendet man zweckmässig Altglas (Weiss-, Braun- und Grünglas) sowie Bruchglas oder Abfallglas. In einigen Fällen wird das Glasmehl nicht beim Hersteller von Schaumglaskörpern hergestellt, sondern schon in der gewünschten Qualität von einem anderen Hersteller bezogen.

Die weiteren praktischen Arbeiten haben gezeigt, dass bei den meisten bisher verwendeten Glasarten Blähtemperaturen von 820°C bis 950°C zweckmässig sind. Aus energetischen Gründen ist eine Optimierung der Blähtemperatur in Funktion der Blähzeit sinnvoll. Günstig haben sich vor allem Blähtemperaturen von 840°C bis 900°C erwiesen. Andere Temperaturbereiche können je nach der Zusammensetzung der vorhandenen Glasarten ebenfalls vorteilhaft sein.

Die Schaumglaskörper werden zweckmässig als Bestandteile von Baumaterialien als Lärm- und/oder Wärmeisolatoren verwendet, wobei die hohe Druckfestigkeit von grossem Vorteil ist. Die genannten Schaumglaskörper (Granulat und Splitt) können auch als Füllmaterial für kunststoffhaltige Baustoffe oder für bitumenhaltige Baubestandteile angesetzt werden. Die Schaumglasplatten kann man an sich oder in Kombination mit anderen Materialien als Sandwichplatten verwenden.

### Patentansprüche

1. Verfahren zur Herstellung von Schaumkörpern aus Glas und/oder glasähnlichem Material und aus einem Aktivator, der aus einem Gemisch von 50 bis 80 Gew.-Teilen Siliciumkarbid, 20 bis 50 Gew.-Teilen Borax und 1 bis 10 Gew.-Teilen Kohlenstoff im trockenen Zustand gebildet und mit dem Mehl aus Glas und/oder glasähnlichem Material in einer Menge von 1,5 bis 2,5 Gew.-% des genannten Mehls trocken vermischt wird und das Gemisch in einem einzigen Verfahrensschritt bei einer Temperatur zwischen 750°C und 950°C während 5 bis 15 min gebläht wird.

2. Verfahren zur Herstellung von Schaumkörpern aus Glas und/oder glasähnlichem Material und aus einem Aktivator, der aus einem Gemisch von 85 bis 95 Gew.-Teilen Siliciumkarbid, aus 1 bis 10 Gew.-Teilen Manganoxyd und aus 1 bis 10 Gew.-Teilen Kohlenstoff im trockenen Zustand gebildet wird und mit dem Mehl aus Glas und/oder glasähnlichem Material in einer Menge von 1,5 bis 2,5 Gew.-% des genannten Mehls trocken vermischt wird und das Gemisch in einem einzigen Verfahrensschritt bei einer Temperatur zwischen 750°C und 950°C während 5 bis 15 min gebläht wird.

3. Verfahren nach Anspruch 2, dadurch gekennzeichnet, dass zusätzlich mit dem Aktivator in einer Menge von 1,5 bis 2,5 Gew.-% des genannten Mehls vor dem Homogenisieren noch ein Metalloxyd, vorzugsweise Bleioxyd oder Kupferoxyd, im trockenen Zustand vermischt wird und dieses Gemisch in einer Menge von 0,5 bis 1,5 Gew.-% des genannten Mehls mit diesem Mehl trocken homogenisiert wird.

4. Verfahren zur Herstellung von Schaumkörpern aus Glas und/oder glasähnlichem Material und aus einem Aktivator, der aus einem Gemisch von 45 bis 50 Gew.-Teilen Siliciumkarbid, 1 bis 10 Gew.-Teilen Kohlenstoff, 20 bis 26 Gew.-Teilen Kupferoxyd und 20 bis 26 Gew.-Teilen Bleioxyd im trockenen Zustand gebildet und mit dem Mehl aus Glas und/oder glasähnlichem Material in einer Menge von 1,5 bis 2,5 Gew.-% des genannten Mehls trocken vermischt wird und das Gemisch in einem einzigen Verfahrensschritt bei einer Temperatur zwischen 750°C und 950°C während 5 bis 15 min gebläht wird.

5. Verfahren nach einem der Ansprüche 1 bis 4, dadurch gekennzeichnet, dass als Kohlenstoff Flammruss angesetzt wird.

6. Verfahren nach einem der Ansprüche 1 bis 5, dadurch gekennzeichnet, dass beim Vermischen des Aktivators mit dem Mehl aus Glas und/oder glasähnlichem Material Kleister und/oder anderes zusammenhaltendes Material in einer Menge von 2 bis 5 Gew.-% des Gemisches oberflächlich angesetzt werden.

7. Verfahren nach einem der Ansprüche 1 bis 6, dadurch gekennzeichnet, dass aus dem Gemisch des genannten Mehls mit dem Aktivator während des Mischens Granulatkörper mittels Granulierverfahren gebildet werden und dass diese danach gebläht und bei Raumtemperatur abgekühlt werden.

8. Verfahren nach einem der Ansprüche 1 bis 6, dadurch gekennzeichnet, dass aus dem Gemisch des genannten Mehls mit dem Aktivator Kuchen hergestellt werden, dass diese danach gebläht werden und dass sie durch Abschrecken mit Kühlluft oder Wasser zum Zerbrechen zu Splitt gebracht werden.

9. Verfahren nach einem der Ansprüche 1 bis 6, dadurch gekennzeichnet, dass das Gemisch des genannten Mehls mit dem Aktivator nach dem Mischen in eine Form als eine flache Schicht gefüllt, danach zu einer Schaumglasplatte gebläht und anschliessend während 5 bis 20 min auf die Raumtemperatur abgekühlt wird.

10. Verfahren nach einem der Ansprüche 7 bis 9, dadurch gekennzeichnet, dass die Granulatkörper oder der Splitt oder die Schaumglasplatten zusätzlich glasiert werden.

11. Vorrichtung zur Durchführung des Verfahrens nach den Ansprüchen 1 und 8, worin ein Ausgang eines Silos (1) für vorgemahlenes Glas und/oder glasähnliches Material und ein Ausgang eines Silos (3) für Aktivator über zugehörige Dosierungsvorrichtungen (2, 4) an einen Mischer (5) angeschlossen sind, dessen Austritt mit Transportern (6) für rohe Kuchen aus einer Mischung des Glasmehls mit dem Aktivator an wenigstens zwei parallel angeordnete Transportbänder (8, 8', 8'') und/oder Bandblähöfen (7, 7', 7'') angeschlossen ist, wobei die Transportbänder (8, 8', 8'') der Bandblähöfen (7, 7', 7'') aus einem elastischem Blech bestehen, und für die in den Bandblähöfen (7, 7', 7'') geblähten Kuchen Leitungen zu Transportern (11) ausgebildet sind, die sich in einem Kühlkanal (10), in dem durch Abkühlung Splitt entsteht, befinden und zum Leiten des Splitts über eine Gleitbahn (14) in einen Lagerungsbehälter (15) bestimmt sind.

12. Vorrichtung zur Durchführung des Verfahrens nach den Ansprüchen 1 und 7, worin ein Ausgang eines Silos (1) für vorgemahlenes Glas und/oder glasähnliches Material und ein Ausgang eines Silos (3) für Aktivator über zugehörige Dosierungsvorrichtungen (2, 4) an einen Granulator (5) angeschlossen sind, dessen Austritt mit Transportern (6) für rohe, mit einem Oberflächenbinder in Granulatform gehaltene Körper aus einer Mischung des Glasmehls mit dem Aktivator an wenigstens zwei parallel angeordnete Blähöfen (7, 7', 7'') angeschlossen sind und für die in den Blähöfen (7, 7', 7'') geblähten Granulatkörper Leitungen zu Transportern (11) ausgebildet sind, die sich in einem Kühlkanal (10) mit Raumtemperatur befinden und zum Leiten der Granulatkörper über eine Gleitbahn (14) in einen Lagerungsbehälter (15) bestimmt sind.

13. Vorrichtung zur Durchführung des Verfahrens nach den Ansprüchen 1 und 9, worin ein Ausgang eines Silos (1) für vorgemahlenes Glas und/oder glasähnliches Material und ein Ausgang eines Silos (3) für Aktivator über zugehörige Dosierungsvorrichtungen (2, 4) an einen Mischer (5) angeschlossen sind, dessen Austritt in Formen führt, die sich auf den Transportern (6) befinden und Grundrisse der herzustellenden Schaumglasplatte vorbestimmen, die Transporter (6) mit den das erwähnte Gemisch enthaltenden Formen an wenigstens zwei parallel angeordnete Transportbänder (8, 8', 8'') und/oder Bandblähöfen (7, 7', 7'') angeschlossen sind und für die in den Bandblähöfen (7, 7', 7'') geblähten Schaumglasplatten Leitungen zu Transportern (12) ausgebildet sind, die sich in einem Kühlkanal (10) befinden und die Schaumglasplatten während der Abkühlung tragen.

7

14. Vorrichtung nach einem der Ansprüche 11 bis 13, dadurch gekennzeichnet, dass zwischen dem Kühlkanal (10) und der Gleitbahn (14) in den Lagerungsbehälter (15) eine Glasiervorrichtung (13) zwischengeschaltet ist.

**Claims**

1. Process for producing foamed bodies of glass and/or glass-like material and of an activator which is formed from a mixture of 50 to 80 parts by weight of silicon carbide, 20 to 50 parts by weight of borax and 1 to 10 parts by weight of carbon in the dry state and is mixed dry with the powder of glass and/or glass-like material in a quantity of 1.5 to 2.5% by weight of the said powder, and the mixture is swollen in a single process step at a temperature between 750°C and 950°C for 5 to 15 minutes.

2. Process for producing foamed bodies of glass and/or glass-like material and of an activator which is formed from a mixture of 85 to 95 parts by weight of silicon carbide, 1 to 10 parts by weight of manganese oxide and 1 to 10 parts by weight of carbon in the dry state and is mixed dry with the powder of glass and/or glass-like material in a quantity of 1.5 to 2.5% by weight of the said powder, and the mixture is swollen in a single process step at a temperature between 750°C and 950°C for 5 to 15 minutes.

3. Process according to Claim 2, characterized in that additionally a metal oxide, preferably lead oxide or copper oxide, is mixed in the dry state with the activator in a quantity of 1.5 to 2.5% by weight of the said powder before homogenization, and this mixture is homogenized dry with this powder in a quantity of 0.5 to 1.5% by weight of the said powder.

4. Process for producing foamed bodies of glass and/or glass-like material and of an activator which is formed from a mixture of 45 to 50 parts by weight of silicon carbide, 1 to 10 parts by weight of carbon, 20 to 26 parts by weight of copper oxide and 20 to 26 parts by weight of lead oxide in the dry state and is mixed dry with the powder of glass and/or glass-like material in a quantity of 1.5 to 2.5% by weight of the said powder, and the mixture is swollen in a single process step at a temperature between 750°C and 950°C for 5 to 15 minutes.

5. Process according to one of Claims 1 to 4, characterized in that flame soot is added as the carbon.

6. Process according to one of Claims 1 to 5, characterized in that, on mixing the activator with the powder of glass and/or glass-like material, paste and/or another cohesive material is added superficially in an amount from 2 to 5% by weight of the mixture.

7. Process according to one of Claims 1 to 6, characterized in that granules are formed by a granulating process from the mixture of the said powder and the activator during mixing, and in that these granules are subsequently swollen and cooled at room temperature.

8. Process according to one of Claims 1 to 6, characterized in that cakes are produced from the mixture of the said powder and the activator, in that these cakes are subsequently swollen, and in that they are broken up into chips by quenching with cooling air or with water.

9. Process according to one of Claims 1 to 6, characterized in that the mixture of the said powder and the activator is poured after mixing into a mould in the form of a flat layer, is subsequently swollen to give a foamed glass plate and is then cooled for 5 to 20 minutes to room temperature.

10. Process according to one of Claims 7 to 9, characterized in that the granules or the chips or the foamed glass plates are additionally glazed.

11. Apparatus for carrying out the process according to Claims 1 and 8, wherein an outlet of a silo (1) for pre-ground glass and/or glass-like material and an outlet of a silo (3) for activator are connected via associated metering apparatuses (2, 4) to a mixer (5) whereof the outlet is connected by means of transporters (6) for raw cakes of a mixture of the glass powder and the activator to at least two parallel conveyor belts (8, 8', 8") and/or conveyor swelling furnaces (7, 7', 7"), the conveyor belts (8, 8', 8") of the conveyor swelling furnaces (7, 7', 7") comprising a resilient metal sheet, and there being constructed for the cakes swollen in the conveyor swelling furnaces (7, 7', 7") lines to transporters (11) which are located in a cooling channel (10) in which chips are formed by cooling and are intended for guiding the chips via a chute (14) to a storage container (15).

12. Apparatus for carrying out the process according to Claims 1 and 7, wherein an outlet of a silo (1) for pre-ground glass and/or glass-like material and an outlet of a silo (3) for activator are connected via associated metering apparatuses (2, 4) to a granulator (5) whereof the outlet is connected by means of transporters (6) for raw cakes held in granule form by a surface binder and comprising a mixture of the glass powder and the activator to at least two parallel swelling furnaces (7, 7', 7"), and there are constructed for the granules swollen in the swelling furnaces (7, 7', 7") lines to transporters (11) which are located in a cooling channel (10) at room temperature and are intended for guiding the granules via a chute (14) to a storage container (15).

13. Apparatus for carrying out the process according to Claims 1 and 9, wherein an outlet of a silo (1) for pre-ground glass and/or glass-like material and an outlet of a silo (3) for activator are connected via associated metering apparatuses (2, 4) to a mixer (5) whereof the outlet leads to moulds which are located on the transporters (6) and pre-determine outlines of the foamed glass plate to be produced, the transporters (6) with the moulds containing the said mixture are connected to at least two parallel conveyor belts (8, 8', 8") and/or conveyor swelling furnaces (7, 7', 7"), and there are constructed for the foamed glass plates swollen in the conveyor swelling furnaces (7, 7', 7") lines to transporters (12) which are located in a cooling channel (10) and which bear the foamed glass plates during cooling.

14. Apparatus according to one of Claims 11 to 13, characterized in that a glazing apparatus (13) is placed between the cooling channel (10) and the chute (14) to the storage container (15).

## Revendications

1. Procédé pour la fabrication de corps expansés composés de verre et/ou de matériau vitreux et d'un activateur qui est constitué d'un mélange de 50 à 80 parties en poids de carbure de silicium, de 20 à 50 parties en poids de borax et de 1 à 10 parties en poids de carbone à l'état sec et mélangé à sec avec la poudre de verre et/ou de matériau vitreux dans une quantité de 1,5 à 2,5% en poids de ladite poudre, le mélange étant gonflé en une seule étape pendant 5 à 15 min à une température comprise entre 750°C et 950°C.

2. Procédé pour la fabrication de corps expansés composés de verre et/ou de matériau vitreux et d'un activateur qui est constitué d'un mélange de 85 à 95 parties en poids de carbure de silicium, de 1 à 10 parties en poids de l'oxyde de manganèse et de 1 à 10 parties en poids de carbone à l'état sec et mélangé à sec avec la poudre de verre et/ou de matériau vitreux dans une quantité de 1,5 à 2,5% en poids de ladite poudre, le mélange étant gonflé en une seule étape pendant 5 à 15 min à une température comprise entre 750°C et 950°C.

3. Procédé selon la revendication 2, caractérisé en ce que, en plus de l'activateur dans une quantité de 1,5 à 2,5% en poids de ladite poudre, on ajoute encore à l'état sec, avec l'homogénéisation, un oxyde métallique, de préférence de l'oxyde de plomb ou de l'oxyde de cuivre, et que ce mélange, dans une quantité de 0,5 à 1,5% en poids de ladite poudre, est homogénéisé à sec avec la poudre.

4. Procédé pour la fabrication de corps expansés composés de verre et/ou de matériau vitreux et d'un activateur qui est constitué d'un mélange de 45 à 50 parties en poids de carbure de sillicium, de 1 à 10 parties en poids de carbone, de 20 à 26 parties en poids d'oxyde de cuivre et de 20 à 26 parties en poids d'oxyde de plomb à l'état sec et mélangé à sec avec la poudre de verre et/ou de matériau vitreux dans une quantité de 1,5 à 2,5% en poids de ladite poudre, le mélange étant gonflé en une seule étape pendant 5 à 15 min à une température comprise entre 750 et 950°C.

5. Procédé selon l'une des revendications 1 à 4, caractérisé en ce que le carbone est mis en oeuvre sous la forme de suie.

6. Procédé selon l'une des revendications 1 à 5, caractérisé en ce que, lors du mélange de l'activateur avec la poudre de verre et/ou de matériau vitreux, de la colle de pâte et/ou une autre matière de cohésion est ajoutée superficiellement en une quantité de 2 à 5% en poids du mélange.

7. Procédé selon l'une des revendications 1 à 6, caractérisé en ce qu'à partir du mélange de ladite poudre avec l'activateur sont formés, pendant le mélange, des granulés au moyen d'un procédé de granulation, et que lesdits granulés sont ensuite gonflés et refroidis à la température ambiante.

8. Procédé selon l'une quelconque des revendications 1 à 6, caractérisé en ce qu'à partir du mélange de ladite poudre avec l'activateur sont préparés des gâteaux, que ceux-ci sont ensuite gonflés et fragmentés en gravillons par trempe avec de l'air de refroidissement ou de l'eau.

9. Procédé selon l'une des revendications 1 à 6, caractérisé en ce que le mélange de ladite poudre avec l'activateur est introduit, après le mélange, en une couche de faible épaisseur dans un moule, gonflé en une plaque de verre mousse, puis refroidi pendant 5 à 20 min à la température ambiante.

10. Procédé selon l'une des revendications 7 à 9, caractérisé en ce que les granulés ou les gravillons ou les plaques de verre mousse sont, en plus, soumis à une vitrification.

11. Dispositif pour la mise en oeuvre du procédé selon les revendications 1 et 8, dans lequel une sortie d'un silo (1) pour le verre et/ou le matériau vitreux prébroyé et une sortie d'un silo (3) pour l'activateur sont raccordées, par l'intermédiaire de dispositifs de dosage (2, 4) associés, à un mélangeur (5) dont la sortie avec des transporteurs (6) pour des gâteaux bruts constitués d'un mélange de verre pulvérisé et d'activateur, est raccordée à au moins deux bandes transporteuses (8, 8', 8") et/ou fours de gonflement à bande (7, 7', 7") disposés en parallèle, les bandes transporteuses (8, 8', 8") des fours de gonflement à bande (7, 7', 7") étant constituées d'une tôle élastique ; et qui comporte pour les gâteaux gonflés dans les fours de gonflement à bande (7, 7', 7") des conduits menant à des transporteurs (11) lesquels sont disposés dans un canal de refroidissement (10) dans lequel des gravillons sont obtenus par refroidissement, et destinés à conduire les gravillons

9

par l'intermédiaire d'une glissière (14) dans un réservoir de stockage (15).

12. Dispositif pour la mise en oeuvre du procédé selon les revendications 1 et 7, dans lequel une sortie d'un silo (1) pour le verre et/ou le matériau vitreux prébroyé et une sortie d'un silo (3) pour l'activateur sont raccordées, par l'intermédiaire de dispositifs de dosage (2, 4) associés, à un granulateur (5) dont la sortie avec des transporteurs (6) pour des corps bruts constitués d'un mélange de verre pulvérisé et d'activateur et maintenus sous forme de granulés au moyen d'un liant superficiel, est raccordée à au moins deux fours de gonflement à bande (7, 7', 7") montés en parallèle ; et qui comporte pour les granulés gonflés dans les fours de gonflement à bande (7, 7', 7") des conduits menant à des transporteurs (11) lesquels sont disposés dans un canal de refroidissement (10) à température ambiante et destinés à conduire les granulés par l'intermédiaire d'une glissière (14) dans un réservoir de stockage (15).

13. Dispositif pour la mise en oeuvre du procédé selon les revendications 1 et 9, dans lequel une sortie d'un silo (1) pour le verre et/ou le matériau vitreux prébroyé et une sortie d'un silo (3) pour l'activateur sont raccordées, par l'intermédiaire de dispositifs de dosage (2, 4) associés, à un mélangeur (5) dont la sortie mène dans des moules placés sur les transporteurs (6) et prédéterminant les contours de la plaque de verre mousse à produire ; les transporteurs (6) avec les moules contenant ledit mélange sont raccordés à au moins deux bandes transporteuses (8, 8', 8") et/ou fours de gonflement à bande (7, 7', 7") disposés en parallèle ; et qui comporte pour les plaques de verre mousse gonflées dans les fours de gonflement à bande (7, 7', 7") des conduits menant à des transporteurs (12) lesquels sont disposés dans un canal de refroidissement (10) et portent les plaques de verre mousse pendant le refroidissement.

14. Dispositif selon l'une des revendications 11 à 13, caractérisé en ce qu'un dispositif de vitrification (13) est intercalé entre le canal de refroidissement (10) et la glissière (14) conduisant au réservoir de stockage (15).

Fig.1

Fig.2

Fig.3